(19) Europäisches Patentamt
European Patent Office
Office européen des brevets

(11) **EP 4 303 561 A1**

(12) **EUROPEAN PATENT APPLICATION**

(43) Date of publication:
**10.01.2024 Bulletin 2024/02**

(21) Application number: **22182878.3**

(22) Date of filing: **04.07.2022**

(51) International Patent Classification (IPC):
**G01N 15/02** (2006.01)   **G01N 27/62** (2021.01)

(52) Cooperative Patent Classification (CPC):
**G01N 15/0227; G01N 15/0255; G01N 15/0266**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventor: **BAN, Loren**
**8006 Zürich (CH)**

(54) **DEVICE AND METHOD FOR THE DETERMINATION OF THE SIZE AND ELECTRIC CHARGE DISTRIBUTION OF AN ENSEMBLE OF PARTICLES**

(57)    A device and method for the determination of the size and electric charge distribution of an ensemble of particles comprising a detection chamber, a first separation unit for separating particles depending on their aerodynamic diameter, a second separation unit for separating particles depending on their electric charge, and a detection unit for detecting particles in the detection chamber. The first separation unit has an inlet for receiving a sample ensemble of particles and an outlet opening out toward the detection chamber, and the first separation unit is designed such that it can form the ensemble of particles into a particle beam that propagates in the detection chamber from the outlet of the first separation unit along a propagation axis (z). The path of a certain particle in the particle beam is deflected by a deflection angle from the propagation axis (z) along a first deflection axis (x) perpendicular to said propagation axis (z), and the deflection angle of the certain particle depends on the aerodynamic diameter of said particle. The second separation unit is designed such that the particles in the particle beam can be subjected to an electric field (E) for deflecting the particles along a second deflection axis (y), perpendicular to the propagation axis (z) and the first deflection axis (x). The deflection from the propagation axis (z) along the second deflection axis (y) of a certain particle propagating in the particle beam and subjected to said electric field depends on the electric charge of said particle. In the detection unit, particle position along both deflection axes (x, y) is recorded, whereby information on the size and charge of the particles is inferred.

Fig. 1

Processed by Luminess, 75001 PARIS (FR)

EP 4 303 561 A1

**Description**

**Field of the invention**

The project leading to this application has received funding from the European Research Council (ERC) under the European Union's Horizon 2020 research and innovation programme (grant agreement No 786636).

The invention relates to devices and methods for the determination of the size and electric charge distribution of an ensemble of particles.

**Background of the invention**

Aerosol particles (AP) are solid or liquid particulate matter suspended in a gas. Aerosol particles are relevant across a great variety of technological fields. In recent years garnering wider public and commercial attention due to their important role in air pollution, climate change and agriculture, as well as viral disease transmission. Aerosol particles are very small, having diameters that span less than 10 $\mu$m, whereby fine aerosol particles such as sea salt nuclei, exhaust aerosol and biological viral aerosol particles span the sub-micrometer range (10 nm to 1 $\mu$m). Factors that can determine the impact of aerosol particles on a particular process are their physical properties, in particular particle number concentration, size and charge.

The effect of particle charge has been argued to play an important role in various processes, ranging from respiratory aerosol deposition, ice nucleation in the atmosphere, and acceleration of chemical reactions. Particle charge may also introduce a sampling bias in measurements. However, particle charge is often ignored, due to the lack of simple instruments capable of determining quantitative, real-time particle charge distributions.

Particle charge is often investigated in regard to electrical mobility analyzers, where precise control of the particle charge distribution is necessary to obtain reliable size distributions. Analogously, measurements of particle charge are only possible for particles of known size. For example, characterization of particle charge distributions can be achieved by combining two instruments (e.g., two differential mobility analyzers; a mobility analyzer coupled to a laser aerosol spectrometer and more recently an aerodynamic aerosol classifier). Such complex experimental setups are costly and lead to complicated measurement procedures, scanning the voltage over a certain mobility range. They do not provide simultaneous information of both size and charge in real-time.

Aerosol particles of sub-micrometer size find further application in fundamental research, where they are used as targets in studies of light-matter interactions and diffraction imaging of particles with free-electron lasers. These experiments require robust methods for in-situ characterization of physical properties (i.e., concentration, size and charge) of particles in vacuum. The small size of fine aerosol particles presents a challenge in that size determination of these particles is difficult with simple, real-time and non-destructive optical methods. A few existing optical methods usually suffer from low size resolution and long measurement times. The latter makes it virtually impossible to reliably study volatile particles due to evaporation during the measurement. Other methodologies exploit particle mobility under electric and aerodynamic forces to determine size and charge, thereby providing information only on the particle size-to-charge ratio. Disentangling size information from charge information requires very complex measurement procedures.

Other methods for simultaneous determination of particulate matter size and charge rely on Laser Doppler Velocimeters (LDV) to track particle motion in external electric and acoustic fields. Although this method offers high sensitivity over a broad size and charge range, it suffers from several disadvantages. Such instruments are voluminous and are expensive both in production and maintenance. Furthermore, an LDV requires a direct line of sight between the velocimeter and the target. Some LDVs even have specific stand-off requirements restricting the geometry of a given setup. Furthermore, LDVs track particulate matter motion on a single-particle basis, meaning that the data is not continuous but rather dictated by the particle arrival in the measuring volume.

Scanning Mobility Particle Sizers (SMPS), as described in US6003389, are a current standard for counting and sizing nanoparticles in air (ISO 15900:2020). An SMPS operates by manipulation of particle motion under an applied electric field, thereby setting a limit to the highest achievable particle size and resolution due of electrostatic breakdown in air. Good resolution (-1%) is only achieved for small particles (about <200 nm in diameter) and sampling times of 1-2 minutes. The instrument is optimized for high sensitivity and can detect small numbers of particles, but it cannot reliably perform the same at high concentrations (>$10^6$ particles/cm$^3$). The focus of SMPS is only on size characterization. Charge characterization is therefore only possible with complicated additional setups, involving multiple instruments.

Aerodynamic Particle Sizers (APS), as described in US 5561515, operate by measuring time-of-flight of individual particles in an accelerating flow field. This leads to high sensitivity to only a few particles, but strongly limits the maximum concentration that can be used (~$10^3$ particles/ cm$^3$). The size range is limited to larger particles (500 nm to 10 $\mu$m), with a resolution of about 2 %. APS instruments can only be used to measure particle size and are not sensitive to particle charge. Therefore, they cannot be used to characterize charge distributions. Again, charge characterization is only possible with complicated additional setups, involving multiple instruments.

US 4633714 discloses an instrument for analyzing the size and charge of aerosol particles. It employs a dual beam Laser Doppler Velocimeter (LDV) to track the motion of a particle, while subjecting the particle to a sinusoidal acoustic field generated by a pair of acoustic transducers and to a pulsed, high voltage electric field. The particle transmitting through the crossed beams of the LDV moves with an oscillatory motion due to the acoustic field and, if the particle is charged, it has a horizontal drift parallel to the electric field during the electric pulse. The phase lag of the particle's motion with respect to the acoustic field is measured to determine the aerodynamic diameter of the particle. The velocity and the direction of the drift relative to the polarity of the applied high voltage electric field is used to determine the magnitude and polarity of the electric charge of the particle.

US 5296910 discloses an aerosol spectrometer that combines the features of forced motion instruments and optical particle sizers. The motion of suspended particles in multiple force fields in a sensing volume of a LDV is used to obtain density, diameter, electric charge, magnetic moment and other physical attributes of individual particles. Furthermore, it is possible to characterize the distribution of particle attributes in an ensemble of particles such as samples of naturally occurring aerosols or a dispersed powder sample.

There is a general need for improvements in this field.

## Summary of the Invention

It is an object of this invention to provide advantageous devices and methods for the determination of the size and electric charge distribution of particle samples.

Particularly, devices and methods according to the invention should allow the simultaneous and real-time determination of particle size and charge, for both charged and neutral particles. Such devices and methods should allow the characterization of both solid and liquid particles, in particular fast evaporating (volatile) particles, for example in aerosol samples.

Such devices and methods according to the invention should also provide improved particle size resolution and range, and advantageously also cover particle sizes of -200 nm to a few $\mu$m that have previously been inaccessible to a single device,

Advantageously, devices and methods according to the invention allow faster sampling, advantageously in real-time, with a time resolution down to milliseconds. They should also allow quantitative or semi-quantitative measurements (e.g. particle concentration in aerosol samples).

Devices according to the invention should be small in volume and less complex than the state of the art, without the need for multiple charge conditioning stages and additional instrumentation. It should be reliable and cost-efficient regarding manufacture and maintenance.

A further object of this invention is to provide advantageous devices and methods that can be directly applied for in-situ characterization of particle beams in terms of particle size and charge, thereby expanding the scope of application in comparison with the state-of-the-art methods.

These and other objects are substantially achieved by the device and the method according to the independent claims. In addition, further advantageous embodiments follow from the dependent claims and the description.

Further aspects of the present invention become evident as this description proceeds.

A first aspect of the present invention concerns a device for the determination of the size and electric charge distribution of an ensemble of particles.

Such a device according to the invention comprises a detection chamber, a first separation unit for separating particles depending on their aerodynamic diameter, a second separation unit for separating particles depending on their electric charge, and a detection unit for detecting particles in the detection chamber. The first separation unit has an inlet for receiving a sample ensemble of particles and an outlet opening out toward the detection chamber, and the first separation unit is designed such that it can form the ensemble of particles into a particle beam that propagates in the detection chamber from the outlet of the first separation unit along a propagation axis. The path of a certain particle in the particle beam is deflected by a deflection angle from the propagation axis along a first deflection axis perpendicular to said propagation axis. The deflection angle of the certain particle depends on the aerodynamic diameter of said particle. The second separation unit is designed such that the particles in the particle beam can be subjected to an electric field for deflecting the particles along a second deflection axis, perpendicular to the propagation axis and the first deflection axis. The deflection from the propagation axis along the second deflection axis of a certain particle propagating in the particle beam and subjected to said electric field depends on the electric charge of said particle.

Such a device provides the advantage that the particle beam is deflected from its principal propagation axis along two orthogonal axes, wherein the deflection along the two axes does not depend identically on the two different parameters, namely the aerodynamic diameter and the charge of the particles. As a result, the information on the deflection in two dimensions allows to obtain information on both of said parameters simultaneously. This may for example be achieved by obtaining a two-dimensional image of a cross-section of the deflected beam, as will be further discussed below.

In the context of this specification, the term Particle Beam Deflection Imaging (PBDI) will also be used for this advantageous approach, as well as PBDI device and PBDI method for a device or method for the determination of the size and electric charge distribution of an ensemble of particles according to the invention.

The detection chamber is advantageously realized as a vacuum chamber.

Operating the device in vacuum allows to integrate such a device according to the invention in in common research setups for in-situ particle characterization.

Advantageously, the first separation unit comprises an aerodynamic inlet device (AID).

More advantageously, the aerodynamic inlet device of the first separation unit comprises an aerodynamic lens stack, comprising a pressure-limiting orifice as the inlet, followed by a plurality of additional orifices, and an accelerating nozzle as the outlet opening towards the detection chamber.

In an advantageous embodiment of a device according to the invention, the second separation unit is designed such that it can generate an electric field, particularly a static electric field, along the second deflection axis.

In another advantageous embodiment of a device according to the invention, the second separation unit comprises two electrical conductors, for example two metallic plates, arranged in the detection chamber and insulatingly separated by a certain distance, and means for generating a certain electric potential between said two electrical conductors.

In a further advantageous embodiment of a device according to the invention, the detection unit comprises means for illuminating particles in the particle beam and means for detecting light scattered by the illuminated particles.

The detection unit of a device according to the invention can further comprise means for generating a sheet of light intersecting with the particle beam, for example means for generating a sheet of laser light perpendicular to the propagation axis.

In a further advantageous embodiment, the detection unit of a device according to the invention comprises means for obtaining a two-dimensional image of light scattered by particles in the particle beam, for example a camera.

A second aspect of the present invention pertains to a method for the determination of the size and electric charge distribution of an ensemble of particles.

Such a method according to the invention comprises the steps of:

- providing a sample ensemble of particles;

- providing a detection chamber;

- providing a first separation unit for separating particles depending on their aerodynamic diameter, wherein the first separation unit has an inlet for receiving the ensemble of particles and an outlet opening out toward the detection chamber; and wherein the first separation unit is designed such that it can form the ensemble of particles into a particle beam that propagates in the detection chamber from the outlet of the first separation unit along a propagation axis, and with the path of a certain particle in the particle beam being deflected by a deflection angle from the propagation axis along a first deflection axis perpendicular to said propagation axis, and with the deflection angle of the certain particle depending on the aero-dynamic diameter of said particle;

- transferring with the first separation unit the sample ensemble of particles into the detection chamber;

- forming with the first separation unit a particle beam propagating in the detection chamber along a propagation axis, with the path of a certain particle in the particle beam being deflected by a deflection angle from the propagation axis along a first deflection axis perpendicular to said propagation axis, and with the deflection angle of the certain particle depending on the aerodynamic diameter of said particle; and

- subjecting the particles in the particle beam to an electric field, thereby deflecting the particles in the particle beam from the propagation axis along a second deflection axis perpendicular to the propagation axis and the first deflection axis, depending on the electric charge of the particles; and

- detecting the position of the particles in the detection chamber.

In an advantageous variant of such a method according to the invention, the particles in the detection chamber are illuminated with light, and the light scattered by the illuminated particles is detected.

In addition, or alternatively, in such a method according to the invention a sheet of light intersecting with the particle beam is generated, for example a sheet of laser light perpendicular to the propagation axis.

In a further advantageous variant of such a method, a two-dimensional image of light scattered by particles of the particle beam is obtained, for example by a camera. Even more advantageously, a distribution of the size and electric charge of the sample ensemble of particles is determined from the resulting two-dimensional image.

In another advantageous variant of a method according to the invention, prior to the determination of the size and electric charge of the sample ensemble of particles, a calibration step with an ensemble of particles with known size distribution is carried out, for calibrating the deflection of particles along the first deflection axis in regard to the aerodynamic diameter of the particles.

In a further advantageous variant of a method according to the invention, prior to the determination of the size and electric charge of the sample ensemble of particles, a calibration step with an ensemble of particles with known size distribution and charge distribution is carried out, for calibrating the deflection of particles along the second deflection axis in regard to the electric charge of the particles.

Advantageously, a method according to the invention is carried out with a device according to the invention.

### Brief description of the drawings

The present invention is explained in greater detail below based on advantageous embodiments and with reference to the attached figures. Further advantages, features, preferences and aims of the invention are disclosed thereby.

Figure 1      schematically shows an embodiment of a PBDI device according to the pre-sent invention for the determination of the size and electric charge distribution of an ensemble of particles, (a) in a top view and (b) in a side view.

Figure 2      shows a particle beam pattern image of a charge-conditioned particle sample measured with a PBDI device according to the present invention, and plots of the expected particle positions for charge states +1$e$ to +6e (left panel), as well as corresponding particle size distribution obtained by integration of the signal along the horizontal axis (right panel).

Figure 3      shows a calibration curve for particle aerodynamic diameter as a function of aerodynamic deflection obtained from measurements on di-ethyl-hexyl-se-bacate (DEHS), oleic acid (OLE) (dotted line), and di-ethyl-hexyl-phthalate (DEHP) (dashed line) samples of different diameters (circles, squares and diamonds) with a PBDI device according to the invention.

Figure 4      shows the size-dependent particle beam velocities obtained from the calibration of the electrostatic deflection axis for DEHS, oleic acid (OLE), and di-ethyl-hexyl-phthalate (DEHP) samples on a PBDI device according to the invention.

Figure 5      shows a particle beam pattern image of a size-selected particle sample measured with a PBDI device according to the present invention, and plots of the expected particle positions for charge states +2e to +6e (left panel), as well as corresponding particle size distribution obtained by integration of the signal along the horizontal axis (right panel).

Figure 6      shows a charge-resolved particle size distributions obtained from a two-dimensional particle beam pattern image measured with a PBDI device according to the present invention, compared to a one-dimensional particle size distribution obtained by integrating the signal over all charge states.

Figure 7      shows particle size distributions for different sheath flow settings on a classifier recorded by a PBDI device according to the present invention.

Figure 8      shows particle mobility distributions for different sheath flow settings on a classifier recorded by a Scanning Mobility Particle Sizer (SMPS).

Figure 9      shows a comparison of particle size distributions determined by the SMPS (dotted line) and the PBDI device according to the invention (solid line) for aerosol samples size-selected at $D_p^{EC} = 150\ \mathrm{nm}$.

Figure 10      shows a comparison of particle size distributions determined by the SMPS (dotted line) and the PBDI device according to the invention (solid line) for aerosol samples which are size-selected at $D_p^{EC} = 175\ \mathrm{nm}$.

Figure 11    shows the particle size resolution for a PBDI device according to the invention (points) compared to the resolution of an SMPS (dashed line) and an electrostatic classifier (solid line) determined from the ideal Differential Mobility Analyzer (DMA) transfer function.

Figure 12    shows bipolar charge distributions determined with a PBDI device according to the present invention for particles with $D_m$ = 309 nm with an applied voltage along the second deflection axis of 3.5 kV (top), 5 kV (middle) and 8 kV (bottom), with corresponding Gaussian fits (full line).

Figure 13    shows bipolar charge distributions obtained from a charging theory (left panel) and the PBDI device according to the invention (right panel) for a range of particle diameters between 233 nm and 550 nm.

**Description of embodiments of the invention**

The examples provided hereinafter serve an improved illustration of the present invention but are not suited for restricting the invention to the features disclosed herein. Components that are identical, or that are identical at least in terms of their function, are designated by identical or at least comparable reference numbers.

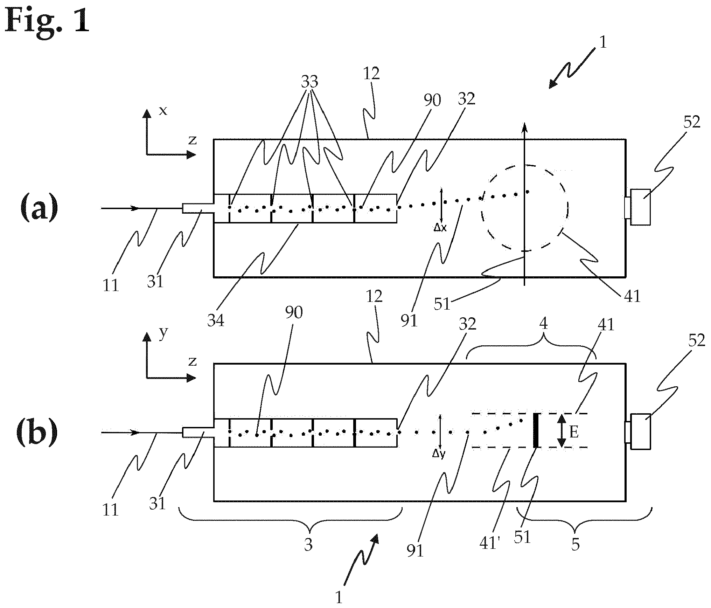

A possible embodiment of a device 1 according to the invention is shown in Figure 1. A particle sample (for example an aerosol sample) is fed via a sample line 11 through inlet 31 into an Aerodynamic Inlet Device (AID) 34 of a first separating unit 3.

The AID is designed based on the previously reported aerodynamic lens stack (cf. US 5565677; US 5270542; Liu et al. Generating Particle Beams of Controlled Dimensions and Divergence: I. Theory of Particle Motion in Aerodynamic Lenses and Nozzle Expansions. Aerosol Sci. Technol. 1995, 22 (3), 314-324). A sequence of orifices 33 of the AID 34 confine the particles and form a particle beam 91 along a propagation axis z. The particle beam 91 then exits the first separating unit 3 and enters the detection chamber 12 through the outlet 32. The pressure in the detection chamber 12 needs to be very low, advantageously less than $10^{-3}$ mbar, in order to avoid collision of the particles in the beam 91 with gas molecules.

Due to the form and position of the orifices 33 and the outlet 32 of the AID 34, as well as the interactions of the particles with the gas molecules of the aerosol flow inside the AID, the path of the individual particles 90 of the beam 91 passing the outlet 32 and entering the detection chamber 12 is deflected from the propagation axis z by a certain angle along a first deflection axis x. This aerodynamic deflection depends on the effective aerodynamic diameter $D_{ca}$ of the particle.

The AID 34 is cylindrically symmetric, which in theory would lead to a cylindrically symmetric particle beam profile. However, for the application in a device according to the invention, the cylindrical symmetry of the beam pattern at the entry into the detection chamber 12 is intentionally broken.

This can be achieved by intentional misalignment of the orifices 33, as well as by small machining imperfections of the orifices. Electrical discharge (ED) machining of orifices is normally recommended for manufacturing AIDs, for achieving symmetrical particle beam profiles (Williams, L. R. et al. Characterization of an aerodynamic lens for transmitting particles greater than 1 micrometer in diameter into the Aerodyne aerosol mass spectrometer. Atmos. Meas. Tech. 6, 3271-3280 (2013)). Thus, advantageously the AID elements of a device according to the invention are machined by conventional high-precision drilling, which leads to more imperfections, eventually leading to a broken symmetry.

For polydisperse particle samples, broken cylindric symmetry of the AID leads to an increased deflection from the propagation axis z along one specific axis perpendicular to the propagation axis z, which is defined to be the first deflection axis x. This effect is termed "aerodynamic deflection" and is exploited in the device and method according to the invention.

This aberration can be assigned to size-dependent particle focusing of the AID 34. It can be characterized by obtaining a calibration curve relates the focusing position along the first axis x to the aerodynamic particle diameter in the continuum regime ($D_{ca}$). For spherical particles, the aerodynamic particle diameter $D_{ca}$ is related to the geometric particle diameter $D_p$ by

$$D_{ca} = D_p \sqrt{\frac{\rho}{\rho_0}},$$

(I)

where $\rho_0$ = 1000 kg/m$^3$ is standard density.

After leaving the AID 34 and entering the detection chamber 12, the particle beam 91 is in vacuum, where continuum regime conditions do no longer hold. In this so-called molecular flow regime, the vacuum aerodynamic diameter $D_{va}$ can be defined as

$$D_{va} = D_p \frac{\rho}{\rho_0}.$$

$$(\text{II})$$

The particle beam 91 subsequently enters a second separating unit 4 within the detection chamber 12, in which it is subject to an electric field E. As a result, particles 90 carrying an electric charge q travelling in the electric field E are deflected along a second deflection axis y, perpendicular to the propagation axis z and the first deflection axis x. The deflection mainly depends on the charge, as well as the velocity of the particles.

The second separating unit 4 comprises of two round metal plates 41, 41' arranged aligned to each other and perpendicular to the second deflection axis y, which form a capacitor. In the given embodiment, a constant voltage of up to $\pm 8$ kV is applied to the plates 41, 41'. The plates are separated by $L_y$ = 17 mm by insulating spacers, for example ceramic spacers. The field lines of the electric field E generated by the potential difference between the two plates 41, 41' are essentially oriented parallel to the second deflection axis y. Charged particles travelling through the field are deflected due to the Lorentz force acting on them.

A particle of mass m and charge q, propagating for time $t$ with velocity $v_z$ along an axis z perpendicular to the field lines of a homogeneous electric field with a constant electric field amplitude $E = \Delta V / L_y$, where $\Delta V$ is the potential difference between the deflector plates, experiences an electromagnetic force $F = qE$. By solving two coupled classical equations of motion, and applying a simplified model with $v_y = 0$ and $a_z = 0$, and $y(t) < z(z)$,

$$z(t) = v_z t + \frac{1}{2} a_z t^2 = v_z t,$$

$$y(t) = v_y t + \frac{1}{2} a_y t^2 = \frac{F}{2m} t^2,$$

$$(\text{III})$$

the magnitude of the deflection $\Delta y$ can be estimated for a point of detection at distance $R_z$ along the propagation axis z as

$$\Delta y = \frac{q\Delta V}{2mL_y} t^2 = \frac{q\Delta V}{2mL_y} \left( \frac{R_z}{v_z} \right)^2.$$

$$(\text{IV})$$

The position of deflected particles can be expressed in terms of geometric particle diameter $D_p$, via the relation

$$m = \rho V = \frac{4}{3} \pi \rho \left( \frac{D_p}{2} \right)^3$$

$$(\text{V})$$

as

$$\Delta y = \frac{3R_z^2}{\pi L_y} \Delta V \left[ \frac{q}{v_z^2 \rho D_p^3} \right].$$

$$(\text{VI})$$

The terms before the square bracket include only the parameters of the first and second deflecting unit (geometry and potential difference of capacitor) and do not depend on the properties of the particle beam, while the term in the brackets contains the relevant particle properties, i.e., particle charge q, geometric diameter $D_p$, density p, and beam velocity $v_z$.

With suitable calibration measurements it has been found that density does not play a relevant role in deflection.

By combining aerodynamic and electrostatic deflection the particle beam 91 forms a two-dimensional pattern from which simultaneous information on size (x axis) and charge (y axis) can be retrieved. For obtaining information on the lateral deflection of the particles 90 in the particle beam 91 along axes x and y, which subsequently allows to derive information on the size and charge of the particles, the position of the particles in relation to the propagation is determined with a detection unit 5.

In the embodiment of a device according to the invention as shown in Figure 1, the detection unit 5 comprises means for illuminating a thin plane perpendicular to the propagation axis z with light. The light sheet 51 is generated by focusing a 4W, 532 nm CWlaser (Verdi, Coherent) with a cylindrical lens (f = 500 mm). Particles 90 passing through this light sheet 51 will scatter the light, which is then recorded with a camera 52 viewing along the propagation axis z. The camera 52 is advantageously slightly offset from the propagation axis z for minimizing disturbances arising from depositions of the particle beam 91 on the camera window. The camera 52 comprises a magnification lens (0.5x, WD = 130 mm) and a camera body (IDS U3-3040CP), resulting in a field of view of about 20 mm x 25 mm. The camera exposure is advantageously set to 50 ms, wherein the images are typically collected for 500-1000 frames, resulting in measurement times of 30-50 s.

The two-dimensional image of the scattered light from the light sheet 51 directly comprises the information on the amount particles 90 in the particle beam 91 having a certain deflection $\Delta$x, $\Delta$y, with the signal intensity being proportional to the number of particles. Since all information can be measured simultaneously, real-time measurements become possible. The temporal resolution is defined by the scattering signal strength and the camera setup used, particularly exposure time and frame rate. Since the images do not comprise color information, monochromatic cameras allow to achieve high temporal resolution.

In contrast to state-of-the-art aerosol size or charge measurement systems, the present invention can cover a wide range of particle sizes in the submicrometer and micrometer range.

An ensemble of aerosol particles can be generated by an atomizer, with equal electrical mobility $Z_p$

$$Z_p = \frac{qC(D_m)}{3\pi\eta D_m},$$

$$(VII)$$

where **q** is the particle charge, $C(D_m)$ is the Cunningham slip correction factor and $\eta$ is the dynamic gas viscosity. After calibration of both aerodynamic and electrostatic axes, the expected position of particles of a given charge as a function of diameter can be calculated from Equation (VI).

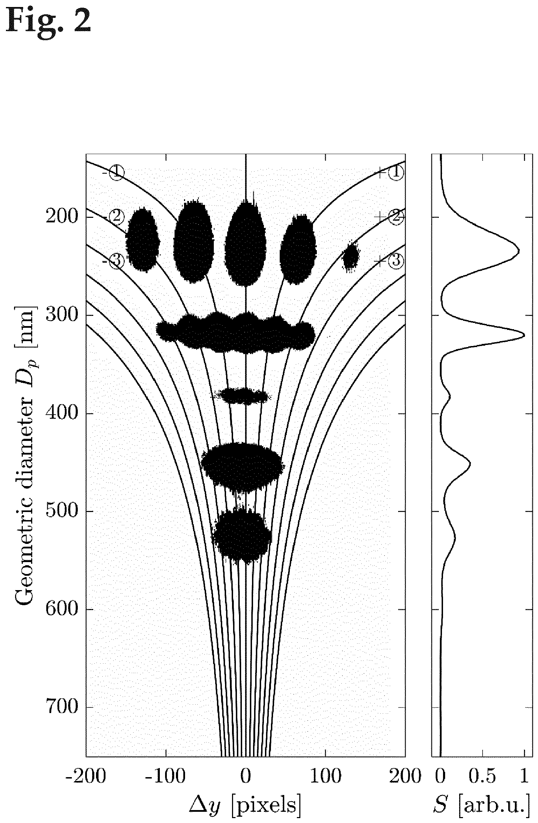

Experimental results obtained with a PBDI device according to the invention are shown in Figure 2, which shows a plot of a measured particle beam for aerosol samples classified at $D_p^{EC} = 150$ nm and after an additional charge conditioning stage. The dotted lines are calculated from the setup calibration for particular charge states q = -6e to +6e (-3e, -2e, -1e, +1e, +2e, +3e marked by circled numbers). The curves displayed on the right of each panel show the overall particle size distribution for a certain electrical mobility diameter, obtained by integrating the measured signal along the horizontal axis.

The particle samples were generated using an atomizer, and classified using a classifier, comprising a differential mobility analyzer (DMA) that extracts particles of a given electrical mobility from the aerosol sample (cf. Knutson, E. O., Whitby, K. T., Aerosol classification by electric mobility: apparatus, theory, and applications. J. Aerosol Sci. 6, 443-451 (1975)). Charge conditioning was performed by bipolar diffusion charging in an aerosol X-ray neutralizer (cf. Wiedensohler, A.; "An Approximation of the Bipolar Charge Distribution for Particles in the Submicron Size Range." J Aerosol Sci., (1988) 19, Vol. 3, pp 387-389).

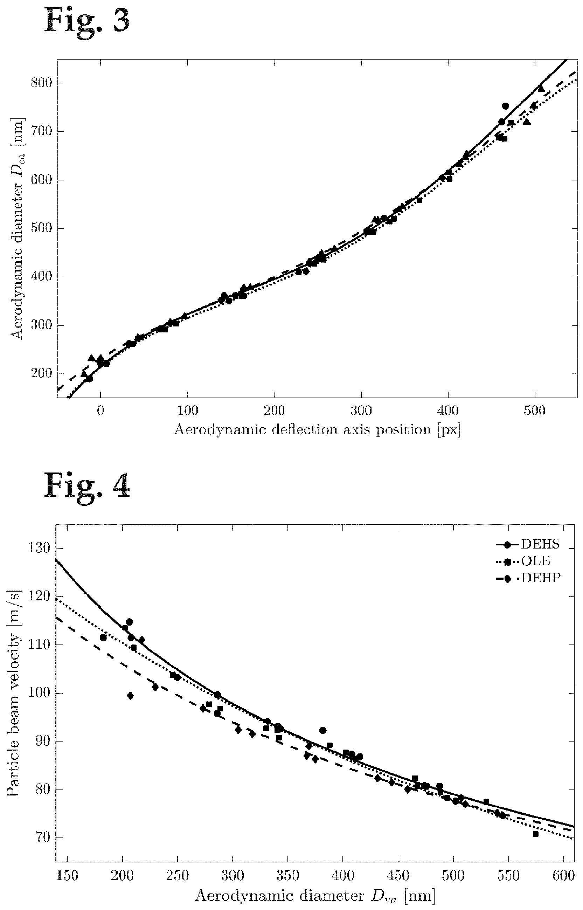

To relate the position of particles along the x axis to the particle diameter, calibration measurements of the first deflection axis x (aerodynamic deflection axis) have been performed. To this end, measurements on different samples with classified particle sizes are combined and the peak aerodynamic deflections are extracted. For example, measurements classified at $D_p^{EC} = 150$ nm and 233 nm can be combined with two additional measurements for aerosol samples classified at $D_p^{EC} = 175$ nm and 200 nm. From all four experimental images, peak positions along the aerodynamic deflection axis can be extracted by multi-component Gaussian fitting of the integrated size distributions. The resulting calibration curve is depicted in Figure 3 for a DEHS, OLE (dotted) and DEHP (dashed) aerosol samples with $D_p^{EC} = 150$ nm (circles), 200 nm (squares) and 233 nm (diamonds).

The peak positions in pixels ($\Delta$x) on the first deflection axis x are assigned to a particle diameter $D_{ca}$, which is referred to as the continuum aerodynamic particle diameter. $D_{ca}$ accounts for the particle density as defined by Equation (I). This curve can be obtained inter alia by fitting 4$^{th}$ order polynomials to the DEHS data set or by combining the PBDI measurements with computational fluid dynamics (CFD) simulations for the development of an analytical model. Verification of the aerodynamic calibration curve is conducted by evaluating the influence of particle density on the deflection magnitude ($\Delta x$). As stated above, there should be no influence because $D_{ca}$ already accounts for different particle densities.

To that end, the experiments can be repeated with samples of additional substances (cf. dashed and dotted lines in Figure 3). These substances should have different densities, which should be accounted for by using $D_{ca}$. All data points should lie within the fit uncertainty of the DEHS data (90% confidence interval), thereby confirming the good quality of the calibration curve. Conversion from $D_{ca}$ to $D_p$ can be performed by simply considering particle density (cf. Equation (I)).

To calibrate the second deflection axis y (electrostatic deflection axis), an ensemble of aerosols of defined charge states is generated using an X-ray neutralizer, which can be installed into the aerosol path after the electrostatic classifier. As expected from Equation (VI), the magnitude of deflection decreases with increasing particle diameter.

From the positions of the undeflected beam, the neutral particles can be assigned to the position $\Delta y = 0$ pixels. As evident from Equation (VI), the magnitude of electrostatic deflection depends on the parameters of the experimental setup, represented by factor $f_e$,

$$(f_e = \frac{3R_z^2}{\pi L_y}\Delta V) \tag{VIII}$$

and on the particle properties represented by factor $f_p$,

$$(f_p = \frac{q}{v_z^2 \rho D_p^3}). \tag{IX}$$

The influence of the experimental setup $f_e$ can be determined from then experimental geometry and the particle density, which is usually known, which leaves only one unknown variable that needs to be calibrated, namely the particle beam velocity $v_z$.

The characterization of particle beam velocity has been described in: Williams, L. R. et al., Characterization of an aerodynamic lens for transmitting particles greater than 1 micrometer in diameter into the Aerodyne aerosol mass spectrometer, Atmos. Meas. Tech. 6, 3271-3280 (2013); Jayne, J. T. et al., Development of an aerosol mass spectrometer for size and composition analysis of submicron particles, Aerosol Sci. Technol. 33, 49-70 (2000).

The particle beam velocity depends on the vacuum aerodynamic diameter ($D_{va}$) and has been well characterized for similar aerosol inlets in aerosol mass spectrometers. The velocity is measured by a time-of-flight measurement and the size-dependent calibration curve usually follows a power scaling law,

$$v_z = \frac{v_g}{1 + (D_{va} + D^*)^b}, \tag{X}$$

where b, $D^*$ and $v_g$ are fit parameters. Typically, velocities of submicrometer particles are reported to be in the range from 100 to 300 m/s, but values of course depend on the specific configuration of the aerodynamic lens.

The calibration of the electrostatic deflection axis can be performed by determining the size-dependent particle velocity from DEHS aerosol samples of known size and charge. Particle size is known from the size-calibration described above and particle charge can be determined from a comparison to the charge-conditioned sample (cf. Figure 2). Then the signal is integrated along the electrostatic deflection axis for each distinct peak, i.e. for each distinct diameter. The resulting integrated distributions contain only one peak whose position relative to the neutral particles is defined as a deflection magnitude ($\Delta y$). Then, Equation (VI) can be used to determine particle beam velocity $v_z$ for the given $\Delta y$, $f_e$ and known particle properties (density, size and charge).

In this way, size-dependent particle beam velocities were obtained for DEHS (circles), OLE (squares) and DEHP (diamonds), as shown in Figure 4. The lines show the fit to the data obtained with Equation (X).

Together, the calibrated aerodynamic and electrostatic axes (first and second deflection axes) allow to precisely assign the size and charge distribution of an unknown particle ensemble from the respective positions in the measured particle beam deflection image.

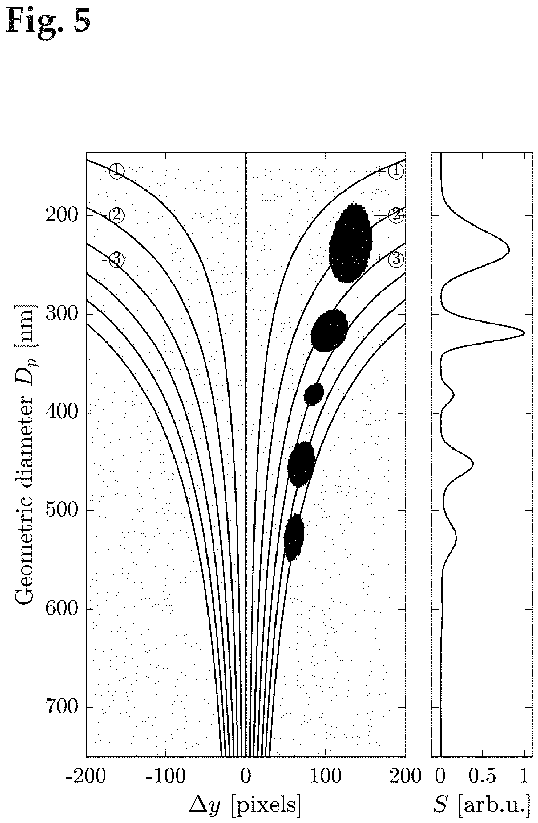

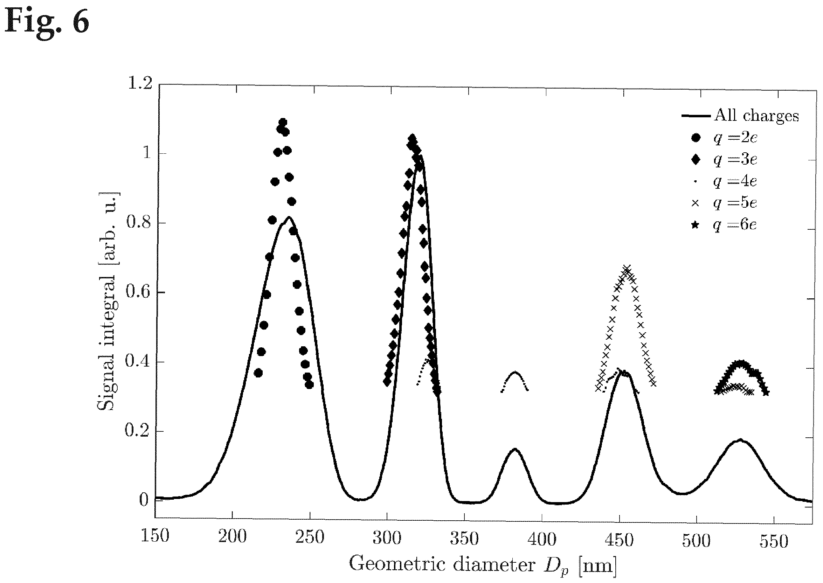

As described in the following, the calibrated aerodynamic and electrostatic axes and the resulting PBDI images enable to extract charge-resolved particle size distributions. This is illustrated by the experimental results shown in Figures 5 and 6. The black circles of different diameters seen in Figure 5 illustrate a charge- and size dependent particle deflection. The charge-independent particle size distribution is shown in Figure 5 as the vertical curve on the right-hand-side. While such a distribution could be obtained from a one-dimensional experiment, no charge resolution would be available. In the two-dimensional PBDI measurement, however, the image can also be integrated along the calibrated particle positions for a specific charge state. The resulting charge-resolved size distributions are shown in Figure 6 for q = +2e (circles), +3e (diamonds), +4e (squares), +5e (triangles), and +6e (stars). The solid line corresponds to the particle distribution over all charge states, as in Figure 5 (right graph).

The data for q = +2e and +3e show that only particles with $D_p$ = 233 nm are found in the +2 charge state, while particles with $D_p$ = 309 nm are found in the +3 charge state. For higher charge states, the distributions are influenced by the resolution of the setup, which results in artifacts. Because the particle beam has a finite width and $\Delta y$ decreases with particle size, contributions from the neighboring peaks appear in the spectra. This can be best seen for the example of q = +4e where the peak from particles with q = (4 ± 1)e charge overlaps with the expected q = +4e position. These overlaps are then translated into the charge-resolved size distribution. Similar artifacts are observed for higher charge states. Nevertheless, the results clearly show how the PBDI setup can provide charge-resolved particle size distributions which correctly describe the classified aerosol sample. This illustrates the perspective of the PBDI setup according to the invention as a simple and fast method to simultaneously determine size and charge of unknown aerosol samples.

A crucial parameter when evaluating the performance with respect to particle size determination is the instrument resolution. The size resolution of the PBDI setup is dictated by the configuration of the AID 34 (cf. Flagan, R. C., On Differential Mobility Analyzer Resolution, Aerosol Sci. Technol. 30, 556-570 (1999)). The particle beam width and the magnitude of aerodynamic deflection determine the minimal difference in particle size that can be resolved by an instrument.

The width of a monodisperse aerosol sample is determined by the resolution (R) of the electrostatic classifier. R is defined using an ideal triangular transfer function as

$$R = \beta^{-1} = \frac{Z_p}{\Delta Z_p} = \frac{Q_{sh}}{Q_a},$$

(XI)

where $\Delta Z_p$ is the FWHM (full width at half maximum) of the electrical mobility peak centered at $Z_p$. The ratio of the aerosol ($Q_a$) to sheath ($Q_{sh}$) flow determines the resolution. Typically, monodisperse aerosol sample and optimal classifier performance are achieved *for R* = 10.

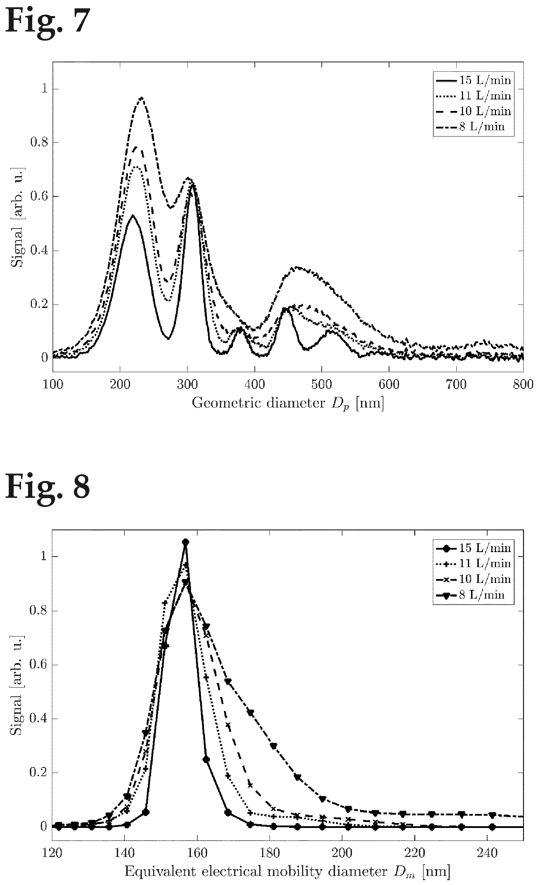

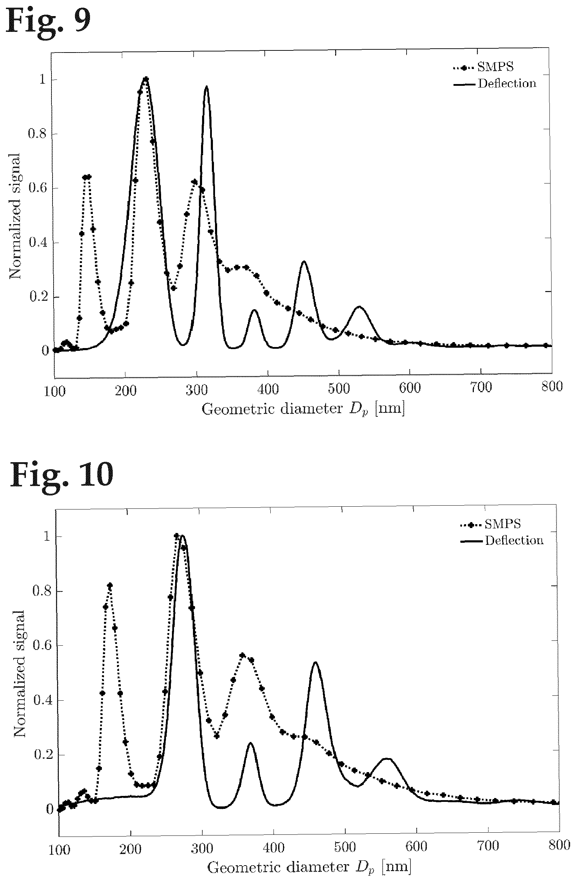

Figure 7 shows a particle size distribution for different classifier sheath flows ($Q_{sh}$, $Q_a$; = 1.3 l/min) recorded by the PBDI setup on the same sample as in Figure 9, classified at 150 nm. Figure 8 shows the equivalent measurements performed with a Scanning Mobility Particle Sizer (SMPS) setup as known from the state of the art. The SMPS spectrum is recorded directly after the classifier (no additional charge conditioning) and therefore consists of a single peak centered at $D_m$ = 150 nm, which contains contributions from all multiply charged (MC) particles that by definition have an equal electrical mobility diameter (cf. Equation (VII)).

The SMPS was operated at a high sheath-to-aerosol flow ratio so that the recorded distributions reflect the transfer function of the classifier. As expected from Equation (XI), an increase in $Q_{sh}$ leads to a clear narrowing of the peaks in both cases. By comparison of PBDI data (Figure 7) and SMPS data (Figure 8), it becomes clear that the width of the PBDI peaks follows the change in the classifier transfer function. Therefore, these results suggest that the resolution of the PBDI setup is limited by the width of the classifier transfer function and not the inherent instrument resolution.

To highlight the particle sizing capabilities of the present invention, a comparison to the existing particle sizing method SMPS is shown in Figures 9 and 10. The SMPS measurements were performed on a wide range of mobility diameters (from -100 nm to -900 nm). An additional X-ray neutralizer was installed after the classifier and the SMPS data was corrected for the MC particles. In this way, particles size distributions retrieved with the PBDI method can be directly compared with those obtained from SMPS measurements.

To extend the SMPS measurement to diameters up to -900 nm, $Q_{sh}$, and in turn the resolution (cf. Equation XI), need to be lowered significantly. A sheath-to-aerosol flow ratio of R = (2 l/min / 0.3 l/min) = 6.7 was used. In Figures 9 and 10, measured particle size distributions for classified particles with $D_p^{EC}$ = 150 nm and $D_p^{EC}$ = 175 nm, respectively, are shown.

The peak positions from the PBDI setup agree well with the expected values (Equation (VII)) and with the SMPS data. In addition, the PBDI setup according to the invention clearly achieves higher sizing resolution than the SMPS over the broad submicrometer size range.

The disagreement at diameters <200 nm arises from insufficient sensitivity of the current PBDI setup to detect particles smaller than 200 nm. The current upper size limit for reliable size measurements is -750 nm, limited by the maximum particle size used in the calibration of the size axis (see above).

Both size distributions are normalized to their corresponding maxima. Although the signal in the PBDI setup is proportional to the particle number concentration (as is the one in the SMPS), the relative contributions of different particle sizes do not match the SMPS measurement. To obtain quantitative information also on particle number concentrations, the PBDI signal requires correction for the size-dependent scattering intensity and the AID transmission function.

For a more quantitative comparison of the PBDI and the SMPS setups, the size resolution $R_D$ is defined,

$$R_D = \frac{D_p}{\Delta D_p},$$

(XII)

where $\Delta D_p$ is the FWHM of a peak centered at diameter $D_p$.

For the PBDI data, the peak positions and widths (FWHM) are determined from multi-component Gaussian fitting of the data from Figures 9 and 10.

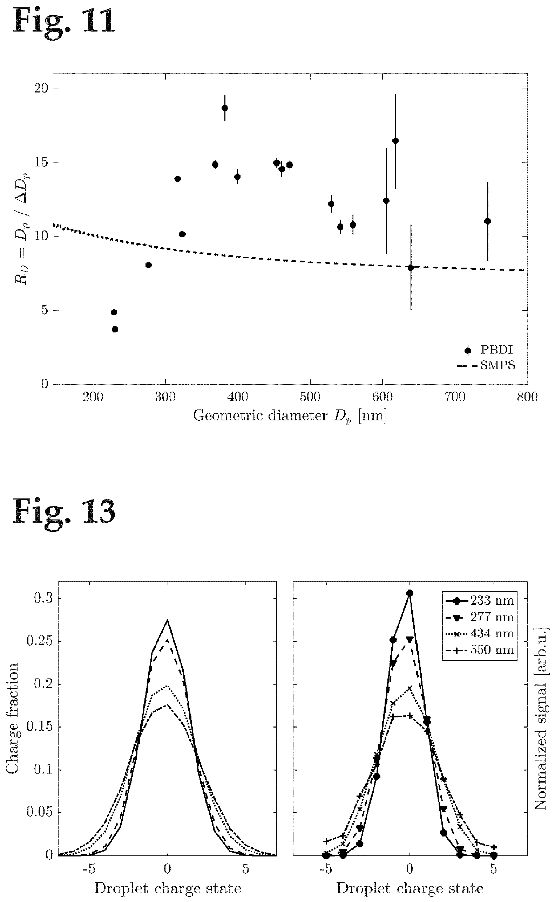

For the SMPS data, $R_D$ was calculated by using Equations (XI) and (XII), with $Q_{sh}$ = 2 l/min and $Q_a$ = 0.3 l/min. The results are shown in Figure 11 as a function of the particle diameter. The size-resolution data of the PBDI setup (circles) is -50 % higher than the SMPS for particle diameters > 300 nm. For smaller particles, the resolution decreases significantly, most likely because of the combination of low detection sensitivity to small particles and larger particle beam width. Further optimization is expected to increase the resolution even further.

In addition to fast measurements, a particular advantage of a PBDI device and method according to the invention is its two-dimensional nature, allowing for a simultaneous measurement of bipolar charge distributions in addition to particle size. To illustrate its performance for charge measurements, the classified aerosol sample can be charge conditioned in an X-ray neutralizer. This leaves the aerosol with a known, size-dependent bipolar charge distribution which can be measured by the PBDI setup and compared to the charging theory (Wiedensohler, A.; "An Approximation of the Bipolar Charge Distribution for Particles in the Submicron Size Range." J Aerosol Sci., (1988) 19, Vol. 3, pp 387-389).

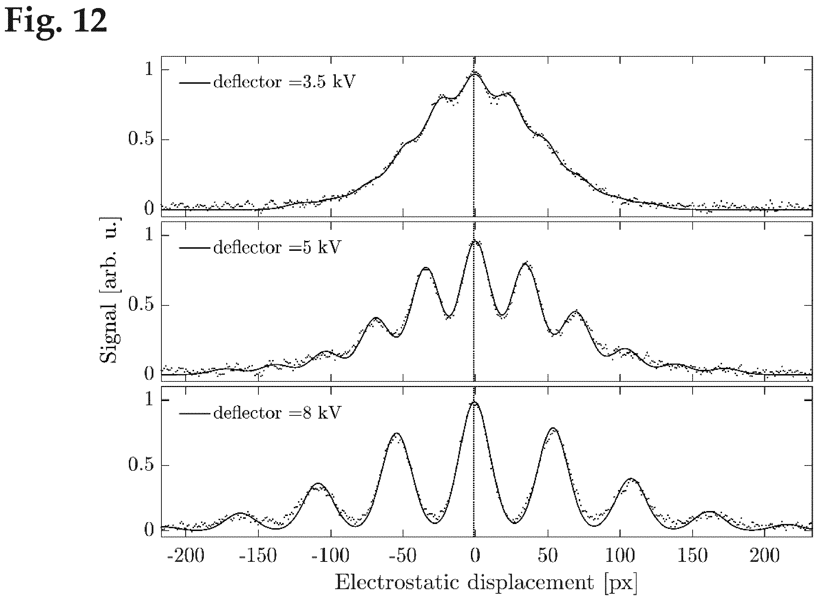

The measured PBDI image (Figure 2) was integrated along the electrostatic deflection axis (y axis) for each particle size to directly obtain the bipolar charge distribution. These distributions are plotted in Figure 12 at three different deflector voltage values for the peak in Figure 2 corresponding to particle size $D_p$ = 309 nm. The experimental data (dots) are well represented by a multi-component Gaussian fit (lines). The peak positions of the Gaussian components are fixed by the calibration of the electrostatic axis (Equation (VI)), and their width is fixed to the width from a measurement with the electrostatic deflector turned off (deflector voltage 0V, not shown). Neutral (undeflected) droplets ($\Delta y$ = 0 pixels) do not shift in position for different deflector voltages. On the other hand, charged droplets show a clear deflection trend and their displacement from the neutral position increases from the lowest voltage (3.5 kV, top panel) to the highest voltage (8 kV, bottom panel). Charge states of up to q=±4e can be clearly identified, and their separation increases with the deflection voltage.

The abundance of each charge state is predicted by the charging theory. The fitted peak amplitudes at 5 kV are obtained from the fit to extracted size-dependent charge distributions. The same procedure was repeated for other diameters present in the classified aerosol samples ( $D_p^{EC}$ = 150 nm, 175 nm, 200 nm, and 233 nm). The charge fractions were determined by normalizing each charge distributions to its corresponding integral. All charge distributions were then scaled by a common factor to roughly match the theoretical values. The result is shown in Figure 13, where the charge fractions obtained from the charging theory (left panel) are compared to the PBDI measurement (right panel) for different particle diameters. The general trend that for larger particles, the bipolar charge distributions broaden toward higher charge states, is reproduced by the PBDI setup according to the invention.

The present invention is not to be limited in scope by the specific embodiments described herein. Indeed, various modifications of the present invention, in addition to those described herein, will be apparent to those skilled in the art from the foregoing description and accompanying drawings. Thus, such modifications are intended to fall within the scope of the appended claims. Additionally, various references are cited throughout the specification, the disclosures of which are each incorporated herein by reference in their entirety.

List of Reference Numerals

| 1 | device |
|---|--------|
| 11 | sample line |

| 12 | detection chamber |
|---|---|
| 3 | first separating unit |
| 31 | inlet |
| 32 | outlet |
| 33 | orifice |
| 34 | aerodynamic inlet device (AID) |
| 4 | second separating unit |
| 41, 41' | metal plate |
| 5 | detection unit |
| 51 | light sheet |
| 52 | camera |
| 90 | particle |
| 91 | particle beam |
| x | first deflection axis, aerodynamic deflection axis |
| y | second deflection axis, electrostatic deflection axis |
| z | propagation axis |
| E | electric field |

**Claims**

1. A device (1) for the determination of the size and electric charge distribution of an ensemble of particles (90), comprising

   a detection chamber (12);
   a first separation unit (3) for separating particles depending on their aerodynamic diameter;
   a second separation unit (4) for separating particles depending on their electric charge;
   a detection unit (5) for detecting particles in the detection chamber;
   wherein the first separation unit (3) has an inlet (31) for receiving a sample ensemble of particles and an outlet (32) opening out toward the detection chamber; and wherein the first separation unit is designed such that it can form the ensemble of particles (90) into a particle beam (91) that propagates in the detection chamber from the outlet of the first separation unit along a propagation axis (z), and with the path of a certain particle in the particle beam being deflected by a deflection angle from the propagation axis along a first deflection axis (x) perpendicular to said propagation axis (z), and with the deflection angle of the certain particle depending on the aerodynamic diameter of said particle; and
   wherein the second separation unit is designed such that the particles (90) in the particle beam (91) can be subjected to an electric field (E) for deflecting the particles along a second deflection axis (y), perpendicular to the propagation axis (z) and the first deflection axis (x); with the deflection from the propagation axis (z) along the second deflection axis (y) of a certain particle propagating in the particle beam and subjected to said electric field depending on the electric charge of said particle.

2. The device according to claim 1, wherein the first separation unit (3) comprises an aerodynamic inlet device (34).

3. The device according to claim 2, wherein the aerodynamic inlet device (34) of the first separation unit (3) comprises an aerodynamic lens stack, comprising a pressure-limiting orifice (31) as the inlet, followed by a plurality of additional orifices (33), and an accelerating nozzle (32) as the outlet opening towards the detection chamber (12).

4. The device according to any of the preceding claims, wherein the second separation unit (4) is designed such that it can generate an electrical field (E), particularly a static electric field, along the second deflection axis (y).

5. The device according to any of the preceding claims, wherein the second separation unit (4) comprises two electrical conductors (41, 41'), for example two metallic plates, arranged in the detection chamber (12) and insulatingly separated by a certain distance, and means for generating a certain electric potential between said two electrical conductors.

6. The device according to any of the preceding claims, wherein the detection unit (5) comprises means for illuminating particles in the particle beam and/or means (52) for detecting light scattered by the illuminated particles.

7. The device according to any of the preceding claims, wherein the detection unit (5) comprises means for generating a sheet of light (51) intersecting with the particle beam (91), for example means for generating a sheet of laser light perpendicular to the propagation axis (z).

8. The device according to any of the preceding claims, wherein the detection unit (5) comprises means (52) for obtaining a two-dimensional image of light scattered by particles in the particle beam, for example a camera.

9. A method for the determination of the size and electric charge distribution of an ensemble of particles, comprising the steps of:

- providing a sample ensemble of particles (90);
- providing a detection chamber (12);
- providing a first separation unit (3) for separating particles depending on their aerodynamic diameter, wherein the first separation unit has an inlet (31) for receiving the ensemble of particles and an outlet (32) opening out toward the detection chamber; and wherein the first separation unit is designed such that it can form the ensemble of particles (90) into a particle beam (91) that propagates in the detection chamber (12) from the outlet (32) of the first separation unit along a propagation axis (z), and with the path of a certain particle in the particle beam being deflected by a deflection angle from the propagation axis (z) along a first deflection axis (x) perpendicular to said propagation axis (z), and with the deflection angle of the certain particle depending on the aerodynamic diameter of said particle;
- transferring with the first separation unit (3) the sample ensemble of particles (90) into the detection chamber (12);
- forming with the first separation unit (3) a particle beam (91) propagating in the detection chamber (12) along a propagation axis (z), with the path of each particle (90) in the particle beam (91) being deflected by a deflection angle from the propagation axis along a first deflection axis (x) perpendicular to said propagation axis (z), and with the deflection angle of the certain particle depending on the aerodynamic diameter of said particle; and subjecting the particles (90) in the particle beam (91) to an electric field (E), thereby deflecting the particles in the particle beam from the propagation axis (z) along a second deflection axis (y) perpendicular to the propagation axis (z) and the first deflection axis (x), depending on the electric charge of the particles; and
- detecting (5) the position of the particles (90) in the detection chamber (12).

10. The method according to claim 9, wherein particles (90) in the detection chamber (12) are illuminated with light (51), and the light scattered by the illuminated particles is detected (52).

11. The method according to claim 9 or 10, wherein a sheet of light (51) intersecting with the particle beam (91) is generated, for example a sheet of laser light perpendicular to the propagation axis (z).

12. The method according to any of claims 9 to 11, wherein a two-dimensional image of light scattered by particles (90) of the particle beam (91) is obtained, for example by a camera (52).

13. The method according to claim 12, wherein a distribution of the size and electric charge of the sample ensemble of particles is determined from the two-dimensional image.

14. The method according to any of claims 9 to 13, wherein prior to the determination of the size and electric charge of the sample ensemble of particles, a calibration step with an ensemble of particles with known size distribution is carried out, for calibrating the deflection of particles along the first deflection axis (x) in regard to the aerodynamic diameter of the particles.

15. The method according to any of claims 9 to 14, wherein prior to the determination of the size and electric charge of the sample ensemble of particles, a calibration step with an ensemble of particles with known size distribution and charge distribution is carried out, for calibrating the deflection of particles along the second deflection axis (y) in regard to the electric charge of the particles.

# Fig. 1

EP 4 303 561 A1

# Fig. 2

## Fig. 3

## Fig. 4

# Fig. 5

Fig. 6

**Fig. 7**

**Fig. 8**

# Fig. 9

# Fig. 10

# Fig. 11

# Fig. 13

EP 4 303 561 A1

**Fig. 12**

Europäisches
Patentamt

European
Patent Office

Office européen
des brevets

# EUROPEAN SEARCH REPORT

Application Number

EP 22 18 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JANNIK L\"UBKE ET AL: "Charge-state distribution of aerosolized nanoparticles", ARXIV.ORG, CORNELL UNIVERSITY LIBRARY, 201 OLIN LIBRARY CORNELL UNIVERSITY ITHACA, NY 14853, 16 November 2021 (2021-11-16), XP091031355, * figures 1,2,4 * * page 1 – page 4 * | 1-8 | INV. G01N15/02 G01N27/62 |
| A,D | LIU P ET AL: "GENERATING PARTICLE BEAMS OF CONTROLLED DIMENSIONS AND DIVERGENCE: I. THEORY OF PARTICLE MOTION IN AERODYNAMIC LENSES AND NOZZLE EXPANSIONS", AEROSOL SCIENCE AND TECHNOLOGY, ELSEVIER SCIENCE PUBLISHING, NEW YORK, NY, US, vol. 22, 1 January 1995 (1995-01-01), pages 293-313, XP008067674, ISSN: 0278-6826 * paragraph [0295] – paragraph [0296] * | 1-15 | |
| A | LENA WORBS ET AL: "Optimizing the geometry of aerodynamic lens injectors for single-particle coherent diffractive imaging of gold nanoparticles", ARXIV.ORG, CORNELL UNIVERSITY LIBRARY, 201 OLIN LIBRARY CORNELL UNIVERSITY ITHACA, NY 14853, 31 May 2021 (2021-05-31), XP081972685, * abstract; figures 1,2 * | 1-15 | TECHNICAL FIELDS SEARCHED (IPC) G01N |
| A | CN 108 048 296 B (UNIV JINAN) 11 June 2021 (2021-06-11) * abstract; figure 2 * | 1-15 | |

The present search report has been drawn up for all claims

| Place of search | Date of completion of the search | Examiner |
|---|---|---|
| The Hague | 23 November 2022 | Lefortier, Stéphanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2878

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2022

| Patent document cited in search report | | Publication date | Patent family member(s) | Publication date |
|---|---|---|---|---|
| CN 108048296 | B | 11-06-2021 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6003389 A
- US 5561515 A
- US 4633714 A
- US 5296910 A
- US 5565677 A
- US 5270542 A

### Non-patent literature cited in the description

- **LIU et al.** Generating Particle Beams of Controlled Dimensions and Divergence: I. Theory of Particle Motion in Aerodynamic Lenses and Nozzle Expansions. *Aerosol Sci. Technol.,* 1995, vol. 22 (3), 314-324
- **WILLIAMS, L. R. et al.** Characterization of an aerodynamic lens for transmitting particles greater than 1 micrometer in diameter into the Aerodyne aerosol mass spectrometer. *Atmos. Meas. Tech.,* 2013, vol. 6, 3271-3280
- **KNUTSON, E. O. ; WHITBY, K. T.** Aerosol classification by electric mobility: apparatus, theory, and applications. *J. Aerosol Sci.,* 1975, vol. 6, 443-451
- **WIEDENSOHLER, A.** An Approximation of the Bipolar Charge Distribution for Particles in the Submicron Size Range. *J Aerosol Sci.,* 1988, vol. 3 (19), 387-389
- **JAYNE, J. T. et al.** Development of an aerosol mass spectrometer for size and composition analysis of submicron particles. *Aerosol Sci. Technol.,* 2000, vol. 33, 49-70
- **FLAGAN, R. C.** On Differential Mobility Analyzer Resolution. *Aerosol Sci. Technol.,* 1999, vol. 30, 556-570